# EUROPEAN PATENT APPLICATION

(11) **EP 4 625 410 A1**
(43) Date of publication of application: **01.10.2025**
(21) Application number: 24166268.3
(22) Date of filing: 26.03.2024
(51) Int. Cl.: G10L 17/04, G10L 17/18, G10L 17/20, G10L 21/0208

(54) **METHOD AND APPARATUS FOR IDENTIFYING A PARTICULAR SPEAKER FROM AUDIO DATA OF SPEECH**

(71) Applicant: Irdeto B.V., 2132 LS Hoofddorp (NL)
(72) Inventor: HE, Shufei, 2132 LS Hoofddorp (NL)
(74) Representative: Boult Wade Tennant LLP

(57) **Abstract**

A method of training a speaker recognition model for identifying a particular speaker from audio data of speech, the method comprising: obtaining training audio data of speech from a plurality of different speakers; generating, using the training audio data, a universal background model; obtaining target audio data of speech of the particular speaker; and generating, using the target audio data and the universal background model, the speaker recognition model; wherein the training audio data and/or the target audio data are denoised according to a denoising algorithm; and wherein the speaker recognition model is configured to: receive as input denoised further audio data of speech, denoised according to the denoising algorithm; and output an indication of whether speech of the denoised further audio data is spoken by the particular speaker.

## Description

### Field of the invention

The present invention relates to speaker recognition technology, in particular a speaker recognition model for identifying a particular speaker from audio data of speech.

### Background of the invention

Speech to text (or speech recognition) systems have, in recent years, become ubiquitous in consumer electronics and information services, with improvements in accuracy allowing numerous devices and systems to be controlled using voice (or spoken) commands. Applications of such systems range from controlling virtual assistants that run on smart devices and personal computers, through to voice control built into things such as vehicles and other machinery.

Whilst in such systems it is important that the speech is accurately converted to text, it is also increasingly important that the systems are able to identify and discriminate between different people speaking. This can be particularly crucial when the systems being controlled are personal devices (such as smart phones) or systems where safety may be a factor (such as in-vehicle voice control systems).

This speaker identification functionality is offered by what are termed speaker recognition (or voice identification) systems. That is speaker recognition technology involves the determination of who is speaking whereas speech to text (or speech recognition) technology is related to the problem of identifying what has been said. In particular, speaker recognition (or voice identification) systems usually seek to enable the identification or authentication of a person from characteristics of their speech.

Typically, in applications of speaker recognition technology, a speaker recognition system is configured to receive audio data of speech and output an indication of whether or not that speech was spoken by a particular speaker. Such speaker recognition systems usually rely on a particular speech model which is trained using speech from the particular speaker. The training allows the model to identify (or `learn') characteristics of the particular speaker's speech and associate those characteristics with the particular speaker as part of the model.

With the increase in power of machine learning techniques, such speaker recognition technology is becoming more widespread, and is now often deployed in a variety of different situations.

Typically, speaker recognition technology is used alongside speech to text (or speech recognition) technology in scenarios where authentication of the user giving commands is desired. For example, speaker recognition technology has been deployed in set-top-boxes, and smart content viewing devices (such as smart TVs) for use in payment authorization. Here it allows, by identifying the speaker, the device to determine whether or not the identified speaker is authorized to make a payment triggered by a voice command. It can also be used in personalisation of content and commands, for example by identifying the speaker from their speech and providing them with content and commands that correlate with a pre-stored information profile for that identified speaker.

Other examples of the use of speaker recognition technology can be seen in its deployment in vehicles. This can be for driver verification/authentication - for example by identifying the speaker from their speech and determining whether or not the identified speaker is an authorized user of the vehicle. Use in this scenario can be independent of any speech to text (or speech recognition) technology as the speech (or voice) may be used solely for authentication, and not associated with any commands as such. That is, there may be no need to know what is being said, only who is saying it.

Moreover, speaker recognition technology can also be deployed in vehicles for personalised in-vehicle services such as car seat position adjustment, for example, by identifying the speaker from their speech and providing them with personalised services that correlate with a pre-stored information profile for that identified speaker.

In most practical applications of speaker recognition technology, there is some background noise which can reduce the accuracy of the speaker identification. For example, when the speaker recognition technology is deployed in a set-top-box, there may be background noise from TV audio. Similarly, when the speaker recognition technology is deployed in a vehicle, there may be background noise from radio or vehicle engine sounds. The background noise may include competing human speech and/or non-human sounds.

Such background noise typically reduces the accuracy of speaker recognition models and algorithms and can result in misidentifications (where the wrong speaker is identified), and also failed identifications (where no speaker is identified). This is clearly problematic and/or inconvenient for users since, for example, it may prevent them from making a payment that they should be authorised to make and/or may adjust the user's car seat to a position that is uncomfortable for them and differs from their preferred preset position stored in their information profile.

It would therefore be desirable to provide a noise-robust speaker recognition method and system.

### Summary of the invention

It is the aim of the invention to provide improved systems and methods for identifying a particular speaker from audio data of speech. In particular, systems and methods for identifying a particular speaker from audio data of speech that are more noise-robust than the known systems and methods.

These systems and methods may be used in conjunction with a speech to text (or speech recognition) system, for example, where it is important to know both what is being said and also who is saying it. Nonetheless, these systems and methods may also be used independently of a speech to text (or speech recognition) system, for example, where it is only important to know who is speaking.

For example, there is provided a use of a speaker recognition system for identifying whether a speaker of test speech is a particular speaker. This use comprises inputting into the speaker recognition system denoised audio data of the test speech and outputting from the speaker recognition system an indication of whether the test speech was spoken by the particular speaker. The speaker recognition system comprises a model generated using: a) audio data of training speech of the particular speaker; and b) a universal background model. The universal background model is generated (or trained), using (or based on) audio data of speech from a plurality of different speakers. At least one of the training speech of the particular speaker and the audio data of speech from the plurality of different speakers is denoised. The denoised test speech and at least one of: i) the denoised training speech of the particular speaker; and ii) the denoised audio data of speech from the plurality of different speakers are denoised using (or by application of) the same denoising algorithm. In this way, the characteristics of the denoising algorithm applied to the test speech are accounted for in the speaker recognition model.

In a first aspect of the invention there is provided a method of training (or calibrating or generating) a speaker recognition model for identifying a particular speaker from audio data of speech, the method comprising: obtaining training (or population or general) audio data of speech from a plurality of different speakers; generating (or training), using (or based on) the training audio data, a universal background model (or initial speaker recognition model); obtaining target (second) audio data of speech of the particular speaker; and generating (or training or retraining or personalizing), using the target audio data and the universal background model, the (personalized) speaker recognition model (corresponding to the target speaker); wherein the training audio data and/or the target audio data are denoised according to (or by application of or using) a denoising algorithm; and wherein the speaker recognition model is configured to: receive as input denoised further audio data of speech, denoised according to the denoising algorithm; and output an indication of whether (or if) speech of the denoised further audio data is spoken by the particular speaker.

In some embodiments, the training audio data is denoised according to the denoising algorithm.

In some embodiments, the speaker recognition model is part of a speaker recognition system, the speaker recognition system further comprising a denoising module configured to generate the denoised further audio data by applying the denoising algorithm to further audio data.

In some embodiments, obtaining the training audio data comprises receiving the training audio data.

In some embodiments, obtaining the training audio data comprises one of: receiving the training audio data; and generating the training audio data by applying the denoising algorithm to pre-denoised training audio data of speech.

In some embodiments, the denoising algorithm comprises a speech enhancement (or noise filtering) algorithm.

In some embodiments, the speech enhancement algorithm is based on one of: a recurrent network; a generative adversarial network; and an autoregressive generative model.

In some embodiments, the speech enhancement algorithm is a single channel noise reduction algorithm.

In some embodiments, the single channel noise reduction algorithm comprises one or more of: spectral subtraction; a signal subspace approach; and iterative Wiener filtering.

In some embodiments, the indication of whether speech of the denoised further audio data is spoken by the particular speaker comprises a confidence score (or probability or likelihood or indication of likelihood) that speech of the denoised further audio data is spoken by the particular speaker.

In some embodiments, obtaining the target audio data comprises obtaining initial audio data of speech of the particular speaker and generating, from the initial audio data, the target audio data by applying the denoising algorithm to the initial audio data.

In some embodiments, the plurality of different speakers comprises 500 or more different speakers.

In some embodiments, the training audio data is of speech comprising at least 8 sentences spoken by each of the plurality of different speakers.

In a second aspect of the invention, there is provided a method of identifying a particular speaker from audio data of speech, the method comprising: inputting, to a speaker recognition model, denoised (further) audio data of speech, denoised according to a denoising algorithm; and outputting, from the speaker recognition model, an indication of whether speech of the denoised (further) audio data is spoken by the particular speaker; (wherein) the speaker recognition model (was) (personalized to the target speaker) generated using (or from): target audio data of speech of the particular speaker; and a universal background model (gaussian mixture model representing general, person-independent, characteristics of the denoised training speech data) generated using training audio data of speech from a plurality of different speakers, wherein the training audio data and/or the target audio data are denoised according to the denoising algorithm.

In some embodiments, the method further comprises generating the denoised (further) audio data by applying the denoising algorithm to (further) audio data of speech.

In a third aspect of the invention, there is provided a system for identifying a particular speaker from audio data of speech, the system comprising: a denoising module configured to: receive as input (further) audio data of speech; and generate denoised (further) audio data of speech by applying a first denoising algorithm to the (further) audio data; and a speaker recognition model configured to: receive as input the denoised (further) audio data; and output an indication of whether speech of the denoised (further) audio data is spoken by the particular speaker; (wherein) the speaker recognition model (is/was) (personalized to the target speaker) generated using (or from): target audio data of speech from the particular speaker; and a universal background model generated using training audio data of speech from a plurality of different speakers, wherein the training audio data and/or the target audio data are denoised according to the denoising algorithm.

### Brief description of the drawings

Embodiments of the invention will now be described, by way of example only, with reference to the accompanying drawings, in which:
Figure 1 schematically illustrates a situation in which a speaker recognition model is used to implement the personalised in-car service of car seat position adjustment using voice control;
Figure 2a schematically illustrates a system for training a speaker recognition model, such as the speaker recognition model of figure 1;
Figure 2b schematically illustrates a method for training a speaker recognition model, such as the speaker recognition model of figure 1;
Figure 3a schematically illustrates a system for identifying a particular speaker from audio data of speech using a speaker recognition model, such as the speaker recognition model trained according to figures 2a-2b;
Figure 3b schematically illustrates a method for identifying a particular speaker from audio data of speech using a speaker recognition model, such as the speaker recognition model trained according to figures 2a-2b;
Figure 4 schematically illustrates an example of a computer system suitable for implementing various aspects of the invention.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

### Example implementation of a speaker recognition model

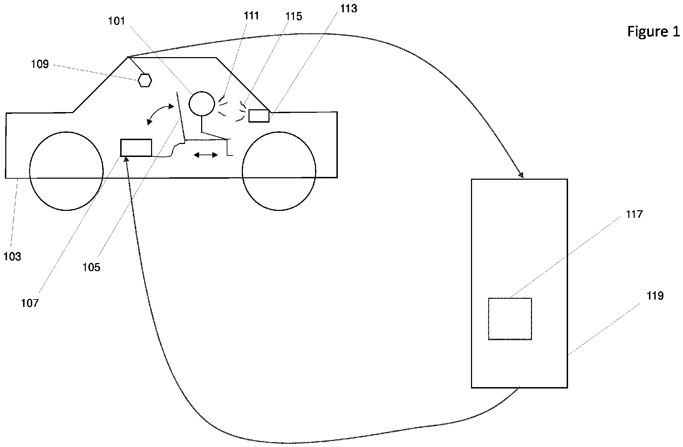

**Figure 1** illustrates a situation in which a user 101 of a car 103 wishes to adjust the position their car seat 105 as a personalised in-car service using voice control. For example, the user 101 may wish to sit on the car seat 105 and use their voice to cause a car seat controller 107 to adjust the position of the car seat 105 to their preferred position, which may be pre-set in an initialisation procedure. As will be appreciated, the user 101 may be one of many users of a given car 103. Thus, to implement the personalised in-car service using voice control, it is desirable to have a mechanism for identifying a particular user 101 (e.g. person A) from their speech. In this way, a user 101 (e.g. person A) can use their voice/speech to effect adjustment of the car seat 105 to their preferred position, and a different user (e.g. person B) can use their voice/speech to effect adjustment of the car seat 105 to their (different) preferred position.

To implement identification of a particular user from audio data of speech, there is a microphone 109 inside the car 103 configured to receive audio (or sound), for example audio signals 111 of speech from the user 101 sat on the car seat 105. These audio signals 111 of speech are processed by the microphone 109 to generate the audio data of speech.

It will be appreciated that the inside of the car 103 is a noisy environment. For example, there may be a stereo player 113 present in the car and configured to play music through a speaker into the car 103 and thereby output audio signals 115 representing the music played. When music is played by the stereo player 113 through the speaker, the microphone 109 will receive audio signals 115 representing the music played. These audio signals 115 representing the music played may be received by the microphone 109 at the same time as the audio signals 111 of speech. In such a case, it will be appreciated that when the audio data of speech is generated by the microphone 109, this audio data of speech will also contain audio data representing the music played and will therefore be noisy audio data of speech.

It will also be appreciated that other sources of noise, such as road noise, will be present in the car 103 and received by the microphone 109. These other sources of noise produce audio signals which may be received by the microphone at the same time as the audio signals 111 of speech. Accordingly, these other sources of noise also result in the generation of noisy audio data of speech in the same way as described above.

The generated audio data of speech is then input into a speaker recognition model 117, of a speaker recognition system 119, configured to output an indication of whether the input audio data of speech is spoken by a particular speaker (e.g. person A) and thereby detect that a particular user 101 is sat on the car seat 105. This output indication is provided to a processor, for example a processor within the car seat controller 107. Responsive to detection of a particular user 101 as being sat on the car seat 105 (by virtue of identification of that particular user from their speech), the car seat controller 107 is configured to adjust the position of the car seat 105 as set out above.

The noise in the audio data of speech may cause the speaker recognition model 117 to output an erroneous indication of whether the input audio data of speech is spoken by a particular speaker (e.g. person A). For example, if music is playing loudly in the car 103 when the speech is spoken by user 101 (e.g. person A), the audio data of speech may be dominated by audio data corresponding to audio signals 115 representing the music played (the music not having been sung/spoken by the user 101). This may cause the speaker recognition model 117 to output an indication that the audio data of speech is not spoken by the user 101 (e.g. person A), even though the audio data of speech contains audio data corresponding to audio signals 111 of speech from the user 101 (e.g. person A). This is undesirable as it could result in noise negatively impacting the performance of the personalised in-car service of car seat 105 position adjustment. That is, the user 101 (e.g. person A) may use their voice to attempt to effect adjustment of the car seat 105 to their preferred preset position but, due to noise, the speaker recognition model 117 may misidentify that user 101 (e.g. identify person B instead of the correct person A, or not identify a person at all) and either adjust the car seat 105 to a position different from their preferred preset position, or not adjust the car seat 105 at all.

To mitigate this deficiency, denoising is applied to the (noisy) audio data of speech and it is the denoised audio data of speech that is input to the speaker recognition model 117 rather than the (noisy) audio data of speech. The denoising is according to (or by application of or using) a denoising algorithm. This denoising algorithm may result in reduction or removal of components of the audio data of speech corresponding to audio signals 115 representing background noise (e.g. the music played in the car 103) while substantially retaining components of the audio data of speech corresponding to audio signals 111 of speech from the user 101 sat on the car seat 105. That is, reducing the impact of background noise on a speaker recognition system, such as speaker recognition system 119, may be achieved by simply removing (at least some) background noise from the speech on which the speaker recognition is performed in use.

As such, the denoised audio data of speech may be less likely to cause the speaker recognition model 117 described above to output an erroneous indication of whether the input audio data is of speech is spoken by the user 101 (e.g. person A) than the (noisy) audio data of speech.

However, the denoising algorithm will not only modify the components of the audio data of speech corresponding to audio signals 115 representing noise (e.g. the parts of the audio data of speech corresponding to audio signals 115 representing music played in the car 103) but also the components of the audio data of speech corresponding to audio signals 111 of speech from the user 101 sat on the car seat 105. That is, in addition to reducing noise, the denoising algorithm will impart specific characteristics on the denoised audio data of speech. Accordingly, alone, such 'denoising' of the audio data of speech on which the speaker recognition is performed in use may not improve or optimise performance of the speaker recognition system 119. This is because, typically, speaker recognition models are trained to identify the particular speaker based on (or from) substantially clean speech from that particular speaker. However, audio data of clean speech and audio data corresponding to 'denoised', e.g. filtered, speech may have different features and may represent characteristics of the particular speaker's speech differently. On account of the different representations of the characteristics of the particular speaker's speech, a speaker recognition model trained using substantially clean speech may misidentify the particular speaker from denoised speech.

To reduce the chance of these specific characteristics of the denoised audio data of speech, caused by the denoising algorithm, resulting in the speaker recognition model 117 outputting an erroneous indication of whether the input audio data is of speech spoken by a particular speaker (e.g. person A), the speaker recognition model 117 can be trained to take into account the specific characteristics imparted by the denoising algorithm. That is, to achieve accurate determination by the speaker recognition model 117 of whether speech of the denoised audio data is spoken by a particular speaker (e.g. person A), the speaker recognition model 117 can be trained in such a way that resulting speaker recognition model takes into account the specific characteristics imparted by the denoising algorithm on the denoised audio data of speech.

### Training the speaker recognition model

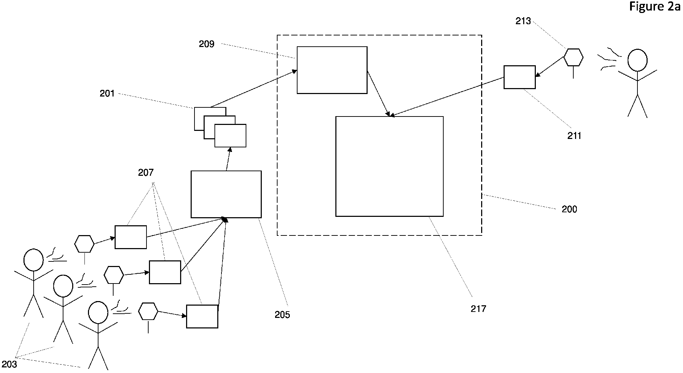

**Figure 2a** shows a schematic arrangement of an example system 200 for training (or calibrating or generating) a speaker recognition model 217, such as speaker recognition model 117, for identifying a particular speaker (e.g. speaker A) from audio data of speech. This system for training takes into account the specific characteristics imparted by the denoising algorithm.

The system 200 is configured to receive as input, training (or population or general) audio data of speech 201 from a plurality of different speakers 203,. For example, the system may be configured to receive as input the denoised audio data of speech described in connection with figure 1 as the training audio data of speech 201.

The plurality of different speakers 203 does not include the particular speaker (e.g. person A) that the speaker recognition model 217 is for identifying. The plurality of different speakers 203 may comprise 10, 50, 100, 200, 300, 400, 500, 600, 700, 800, 900, 1000 or more different speakers. The training audio data 201 may be of speech from the plurality of different speakers 203 comprising at least, 2, 3, 4, 5, 6, 7, 8, 9, 10, 20, or 50 sentences spoken by each of the plurality of different speakers 203.

The system 200 is further configured to generate (or train), using (or based on or from) the training audio data of speech 201, a universal background model 209. As will be appreciated, the universal background model 209 is a model used to represent general, person-independent feature characteristics of speech. See, for example, M Omar et. al, IBM Research Report, Training Universal Background Models for Speaker Recognition, 1 March 2010, which can be accessed from https://dominoweb.draco.res.ibm.com/reports/rc24953.pdf and which is incorporated herein by reference in its entirety. The universal background model is typically a Gaussian mixture model. See, for example, Reynolds, D.A. et. al, 2000, Speaker verification using adapted Gaussian mixture models, Digital signal processing, 10(1-3), pp.19-41, which can be accessed from https://doi.org/10.1006/dspr.1999.0361 and which is incorporated herein by reference in its entirety. The Gaussian mixture model may be trained using the denoised training audio data and an expectation maximisation algorithm, e.g. by using a maximum likelihood criterion, for example as described at M Omar et. al, IBM Research Report, Training Universal Background Models for Speaker Recognition, 1 March 2010 (which can be accessed from https://dominoweb.draco.res.ibm.com/reports/rc24953.pdf). The Gaussian mixture model may be speaker independent and trained with a dataset of speech samples from a large number of different speakers to represent general (human) speech characteristics.

An example of such a dataset is the TIMIT Acoustic-Phonetic Continuous Speech Corpus. The TIMIT Acoustic-Phonetic Continuous Speech Corpus is a standard dataset which comprises recordings of 630 speakers of 8 dialects of American English, each reading 10 sentences. The TIMIT Acoustic-Phonetic Continuous Speech Corpus can be accessed from https://catalog.ldc.upenn.edu/LDC93s1, the entire contents of which are incorporated herein by reference.

Another example of such a data set is the LibriSpeech ASR Corpus, as described in Panayotov, V et al., 2015, April. Librispeech: an asr corpus based on public domain audio books, in 2015 IEEE international conference on acoustics, speech and signal processing (ICASSP) (pp. 5206-5210), IEEE, DOI: 10.1109/ICASSP.2015.7178964, which can be accessed from https://ieeexplore.ieee.org/document/7178964 and which is incorporated herein by reference in its entirety. The LibriSpeech ASR Corpus is a standard dataset which comprises approximately 1000 hours of read English speech, from 2484 speakers (1201 women and 1283 men), based on LibriVox's public domain audio books. The LibriSpeech ASR Corpus can be accessed from https://www.openslr.org/12, the entire contents of which are incorporated herein by reference.

Another example of such a data set is VoxCeleb, as described in Nagrani, A., et al. 2017. Voxceleb: a large-scale speaker identification dataset, that can be accessed from https://doi.org/10.48550/arXiv.1706.08612 and which is incorporated herein by reference in its entirety. The VoxCeleb dataset contains 1150000 utterances of more than 2000 hours from 7363 speakers spanning a wide range of different ethnicities, accents, professions, and ages. The VoxCeleb dataset can be accessed from https://www.robots.ox.ac.uk/∼vgg/data/voxceleb/, the entire contents of which are incorporated herein by reference.

The system 200 is also configured to receive as input target (second) audio data of speech of the particular speaker 211 (e.g. person A). The target (second) audio data of speech 211 may be received by the system during a set-up procedure, and may be received before or after the universal background model 209 is generated. In the set-up procedure, the particular speaker may speak a number of sentences into a microphone 213 (or other audio signal receiver) to generate the target audio data of speech 211. The microphone 213 may, for example, be microphone 109 described in connection with figure 1 or may be a different microphone such as a microphone in the particular speaker's mobile phone. The number of sentences spoken into the microphone 213 may be, for example, 1, 5, 10, 15, 20 or more. The sentences may be predefined and provided to the user on a display or a set-up information booklet.

The training audio data 201 and/or the target audio data 211 are denoised according to (or by application of or using) a denoising algorithm. That is, at least one of the training audio data 201 and the target audio data 211 are denoised according to (or by application of or using) the denoising algorithm.

The denoising algorithm may comprise (or be) a speech enhancement (or noise filtering) algorithm. The speech enhancement algorithm may be based on one of: a recurrent network; a generative adversarial network; and an autoregressive generative model. Examples of such a recurrent network; a generative adversarial network; and an autoregressive generative model are provided at J. M. Valin, A hybrid DSP/deep learning approach to real-time full-band speech enhancement, 2018 IEEE 20th international workshop on multimedia signal processing (MMSP), pp. 1-5. IEEE, 2019 (which can be accessed from https://doi.org/10.48550/arXiv.1709.08243); S Pascual et al. SEGAN: Speech enhancement generative adversarial network (which can be accessed from https://doi.org/10.48550/arXiv.1703.09452); and D. Rethage et al., A wavenet for speech denoising, 2018 IEEE International Conference on Acoustics, Speech and Signal Processing (ICASSP), pp. 5069-5073. IEEE, 2018 (which can be accessed from https://doi.org/10.48550/arXiv.1706.07162), all of which are incorporated herein by reference in their entirety. Alternatively or additionally, the speech enhancement algorithm may be a single channel noise reduction algorithm as described at S Schmitt et. al, Single Channel Noise Reduction for Hands Free Operation in Automotive Environments, Audio Engineering Society Convention Paper, May 2002 (which can be accessed from https://123.physics.ucdavis.edu/week 5 files/filters/noise reduction.pdf) and which is incorporated by reference in its entirety. The single channel noise reduction algorithm may comprise (or be) one or more of: spectral subtraction; a signal subspace approach; and iterative Wiener filtering. Examples of such spectral subtraction; signal subspace approach; and iterative Wiener filtering are provided at M. Berouti et al. Enhancement of speech corrupted by acoustic noise IEEE International Conference on Acoustics, Speech, and Signal Processing, vol. 4, pp. 208-211. IEEE, 1979 (which can be accessed from https://www.researchgate.net/publication/224738211 Enhancement of speech corrupted by acoustic noise); Y. Ephraim et al. A signal subspace approach for speech enhancement. IEEE Transactions on Speech and Audio Processing, vol. 3, no. 4 (1995), pp. 251-266 (which can be accessed from http://dx.doi.org/10.1109/89.397090); and J. Lim, et al, All-Pole Modelling of Degraded Speech. IEEE Transactions on Acoustics, Speech, and Signal Processing 26.3 (1978): 197-210. (which can be accessed from https://www.semanticscholar.org/paper/All-pole-modeling-of-degraded-speech-Lim-Oppenheim/50a641d27ec5788bfcc58e1855f0ff28f4cdde3a) all of which are incorporated herein by reference in their entirety.

The system 200 is configured to generate (or train or retrain or personalize), using the target audio data 211 and the universal background model 209, the (personalized) speaker recognition model 217 (corresponding to the particular speaker). The speaker recognition model 217 is configured to: receive as input denoised further audio data of speech, denoised according to the denoising algorithm (i.e. the same denoising algorithm applied to the training audio data of speech 201 and/or the target audio data of speech 211); and output an indication of whether speech of the denoised further audio data is spoken by the particular speaker. An example of such a speaker recognition model is speaker recognition model 117 described in connection with figure 1. The system 200 is configured to output the speaker recognition model 217. The training of the speaker recognition model 217 typically comprises adapting the parameters of the universal background model 209 using the target audio data 211 and an expectation maximisation algorithm, e.g. maximum a posteriori estimation. An example of such an algorithm can be found at Ting-Yao Wu et. al, Universal Background Models For Real-Time Speaker Change Detection January 2003, which can be accessed from https://www.researchqate.net/publication/220989048 Universal Background Models for Real-time Speaker Change Detection and which is incorporated herein by reference in its entirety.

The training (or population or general) audio data of speech 201 may be received by the system 200 from a denoising module 205 which is not part of the system 200. The denoising module 205 may be configured to: receive as input the (noisy) audio data of speech 207; apply a denoising algorithm as discussed above to the input (noisy) audio data of speech 207 to generate denoised audio data of speech; and output the denoised audio data of speech as training audio data of speech 201. Additionally or alternatively, the target audio data of speech 211 may be received by the system from a denoising module which is not part of the system 200. The denoising module may be configured to: receive as input the (noisy) initial audio data of speech; apply a denoising algorithm as discussed above to the input (noisy) initial audio data of speech to generate denoised initial audio data of speech; and output the denoised initial audio data of speech as target audio data of speech 211. It will be appreciated that the same denoising module may be used to generate the target audio data of speech 211 and the training audio data of speech 201 or that different denoising modules may be used to generate the target audio data of speech 211 and the training audio data of speech 201.

It will be appreciated that the system 200 may be configured to receive the training audio data of speech 201 and/or the target audio data of speech 211 from a denoising module directly (as illustrated in figure 2a for the training audio data of speech 201 and denoising module 205) or indirectly. Moreover, it will also be appreciated that the system may instead be configured to receive as input (noisy) audio data of speech and/or (noisy) initial audio data of speech. In this embodiment, the (noisy) audio data of speech and/or (noisy) initial audio data of speech is not received from a denoising module such as denoising module 205 either directly or indirectly. Thus, the denoising module 205 is an optional feature as described. However, where the system 200 is configured to receive as input (noisy) audio data of speech and/or (noisy) initial audio data of speech, the system 200 comprises a denoising module configured to: receive as input at least one of the (noisy) audio data of speech and the (noisy) initial audio data of speech; apply a denoising algorithm as discussed above to the received at least one of the input (noisy) audio data of speech and the (noisy) initial audio data of speech to generate at least one of denoised audio data of speech and denoised initial audio data of speech respectively; and output the generated at least one of the denoised audio data of speech and the denoised initial audio data of speech as at least one of the training audio data of speech and target audio data of speech respectively. That is, denoising module 205 may be part of system 200 rather than separate from it.

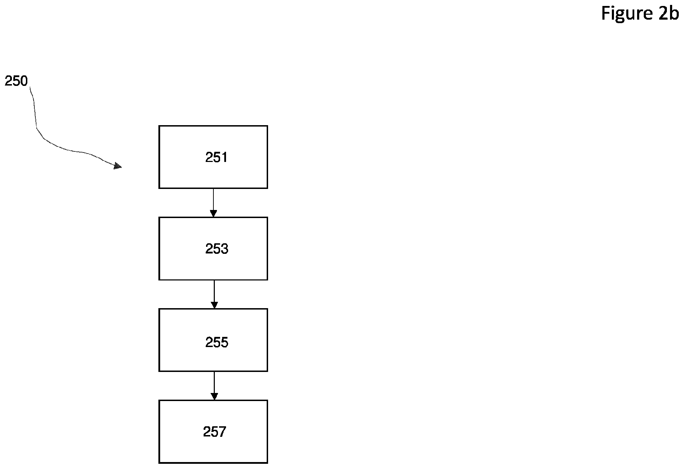

**Figure 2b** is a flow diagram schematically illustrating a method 250 of training (or calibrating or generating) a speaker recognition model, such as speaker recognition model 117 or speaker recognition model 217, for identifying a particular speaker (e.g. speaker A) from audio data of speech. This method of training takes into account the specific characteristics imparted by the denoising algorithm. The method 250 may be performed using the system 200 described above.

In method 250, a step 251 comprises obtaining training (population or general) audio data of speech from a plurality of different speakers. The training audio data may be training audio data 201.

In method 250, a step 253 comprises generating (or training), using (or based on or from) the training audio data, a universal background model (initial speaker recognition model). The universal background model may be universal background model 209.

In method 250, a step 255 comprises obtaining target (second) audio data of speech of the particular speaker (e.g. person A).

The training audio data and/or the target audio data are denoised according to (or by application of or using) a denoising algorithm.

The obtaining the target audio data may comprise obtaining initial audio data of speech of the particular speaker (e.g. speaker A) and generating, from the initial audio data, the target audio data by applying the denoising algorithm to the initial audio data. The initial audio data of speech of the particular speaker (e.g. speaker A) may be initial audio data of substantially clean speech of the particular speaker (e.g. speaker A). To obtain the initial audio data of substantially clean speech of the particular speaker (e.g. speaker A), the obtaining the initial audio data of speech of the particular speaker (e.g. speaker A) may be carried out in a controlled environment. The controlled environment may be a car, such as car 103. The particular speaker (e.g. speaker A) may be a user 101 sat on a car seat 105 in a car 103 as shown in Figure 1. The user 101 may be provided with 'set-up' instructions, for example instructions displayed on a screen in the car 103 or on a screen of a portable user device or in a pre-printed written instruction booklet, on how to minimize background noise and obtain initial audio data of substantially clean speech of the particular speaker (e.g. speaker A). The target audio data of speech may be target audio data of speech 211.

In method 250, a step 257 comprises generating (or training or retraining or personalizing), using the target audio data and the universal background model, the (personalized) speaker recognition model (corresponding to the particular speaker). The speaker recognition model (generated at step 257) is configured to: receive as input denoised further audio data of speech, denoised according to the denoising algorithm; and output an indication of whether speech of the denoised further audio data is spoken by the particular speaker. The speaker recognition model may be part of a speaker recognition system, such as speaker recognition system 119 described in figure 1, the speaker recognition system further comprising a denoising module configured to generate the denoised further audio data by applying the denoising algorithm to further audio data.

The indication of whether speech of the denoised further audio data is spoken by the particular speaker may comprise a confidence score (or probability or likelihood or indication of likelihood) that speech of the denoised further audio data is spoken by the particular speaker. Alternatively, the indication of whether speech of the denoised further audio data is spoken by the particular speaker may comprise a binary 'yes'/'no' indication.

In a first variation of the method 200 above, further steps could be performed to train the speaker recognition model for both identifying the particular speaker (e.g. speaker A) and a second (different) particular speaker (e.g. speaker B) from audio data of speech. To achieve this, the further steps performed may comprise a) obtaining additional target (third) audio data of speech of the second (different) particular speaker (e.g. speaker B); and b) generating (or training or retraining or personalizing), using the additional target audio data of speech of the second (different) particular speaker and the speaker recognition model, an updated (personalized) speaker recognition model (corresponding to the both the particular speaker and the second (different) particular speaker).

In a second variation of the method 200 above, the method 200 could be modified to train the speaker recognition model for both identifying the particular speaker (e.g. speaker A) and a second (different) particular speaker (e.g. speaker B) from audio data of speech. To achieve this, an additional step may be performed comprising a) obtaining additional target (third) audio data of speech of the second (different) particular speaker (e.g. speaker B), In addition, instead of step 257 of generating, using the target audio data and the universal background model, the speaker recognition model, an alternative step could be performed comprising generating (or training or retraining or personalizing), using the target audio data, the additional target audio data and the and the universal background model, a (personalized) speaker recognition model (corresponding to the particular speaker and the second (different) particular speaker).

It will be appreciated that both the first and second variations could be combined or repeated in order to train the speaker recognition model to identify further different particular speakers.

It will also be appreciated that the denoising module used to generate the denoised further audio data by applying the denoising algorithm to further audio data may also be used to generate the training audio data of speech from a plurality of different speakers by applying the (same) denoising algorithm to (noisy) input audio data of speech and/or may be used to generate the target audio data of speech by applying the denoising algorithm to the initial audio data . Alternatively, it will be appreciated that the denoising module used to generate the denoised further audio data by applying the denoising algorithm to further audio data may be different from a denoising module used to generate the training audio data of speech from the plurality of different speakers and/or the target audio data of speech. Moreover, multiple distinct denoising modules may be used to generate the training audio data of speech from the plurality of different speakers and/or the denoised further audio data and/or the target audio data of speech. The outputs of these multiple distinct denoising modules may be combined to generate the training audio data of speech from the plurality of different speakers and/or the denoised further audio data and/or the target audio data of speech.

### Use of the speaker recognition model

While Figure 1 above illustrates one specific situation in which a speaker recognition model 117 is used to identify a particular speaker from audio data of their speech, it will be appreciated that this is not the only use of such a speaker recognition model. For example, this speaker recognition model 117 could be used in vehicles for other purposes (such as driver verification). Alternatively, the speaker recognition model 117 could be used in set-top-boxes for payment authorisation, and personalisation of content and commands. Set-top-boxes are a particularly useful application of such a speaker recognition model 117 since they are often in a noisy environment e.g. with background TV sound. It will be appreciated however, that the speaker recognition model 117 has more general applicability in any situation requiring speaker authorisation and/or authentication, and more broadly in any situation requiring or benefitting from hands-free identification of a particular speaker.

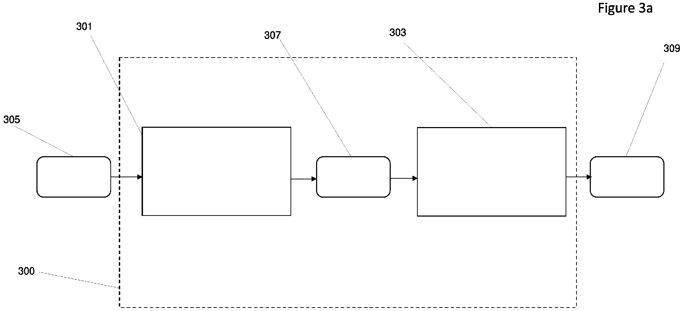

**Figure 3a** shows a schematic arrangement of an example system 300 for identifying a particular speaker from audio data of speech.

This system 300 could be used for identifying a particular speaker from audio data of speech in any of the situations listed above and may be implemented using speaker recognition model trained using method 250 above.

The system 300 comprises a denoising module 301 connected to a speaker recognition model 303. It will be appreciated that this connection may be direct or indirect.

The denoising module 301 is configured (or arranged) to: receive as input (further) audio data of speech 305; and generate denoised (further) audio data of speech 307 by applying a denoising algorithm to the (further) audio data 305. The denoising algorithm may be any of the denoising algorithms described above. It will be appreciated that the (further) audio data of speech 305 may be audio data of speech spoken by a user 101 sat on a car seat 105 as described in connection with figure 1.

The speaker recognition model 303 is configured to: receive as input the denoised (further) audio data 307; and output an indication 309 of whether speech of the denoised (further) audio data 307 is spoken by the particular speaker. The speaker recognition model 303 being (personalized to the particular speaker and) generated using (or from): target audio data of speech from the particular speaker; and a universal background model, the universal background model generated using training audio data from a plurality of different speakers, wherein the training audio data and/or the target audio data are denoised according to the denoising algorithm. It will be appreciated that the target audio data of speech may be target audio data of speech 211 and the universal background model may be universal background model 209.

As described in connection with figure 2b above, the indication 309 of whether speech of the denoised further audio data is spoken by the particular speaker may comprise a confidence score (or probability or likelihood or indication of likelihood) that speech of the denoised further audio data is spoken by the particular speaker. Alternatively, the indication 309 of whether speech of the denoised further audio data is spoken by the particular speaker may comprise a binary 'yes'/'no' indication. It will be appreciated that, where the speaker recognition model 303 is trained to identify more than one particular speaker, as described above in the variations of figure 2b, the indication 309 may comprise an indication identifying a specific one of the particular speakers the speaker recognition model 303 is trained to identify. This indication may be, for example, a name of a particular speaker, an identification number of a particular speaker, or some other identifying characteristic of a particular speaker.

It will be appreciated that the indication 309 may be configured to be used in further processing. For example, the indication 309 may be configured to be input into a speech to text (or speech recognition) system. That speech to text system may be configured to identify a command from the speech spoken and, subject to verification or authentication, using the indication 309, that the speech is spoken by a particular speaker, action the command identified from the speech. In one example, the indication 309 may be an identification number of a particular speaker. The identification number may be input into the car seat controller 107 described in connection with figure 1. The car seat controller 107 may also comprise a speech to text system. The car seat controller 107 may be configured to determine whether a command such as "adjust my seat position" is spoken (e.g. by the user 101 sat on the car seat 105) and, based on the indication 309 (identification number), determine that the command was spoken by a particular speaker. Subject to the determination that the particular speaker is speaking, and that the particular speaker is saying "adjust my seat position", the car seat controller 107 may be configured to cause adjustment of the car seat 105 in accordance with a pre-set profile of the identified particular speaker. This pre-set profile may be selected from a reference table using the identification number. Similarly, the indication 309 may be used in combination with a speech to text system, for example a speech to text system in a mobile device, to authorise a hands-free payment, among many other potential applications.

It will be appreciated that the system 300 may be or may be implemented on or using a computer system, which may be a cloud-based computer system. The system 300 may be, or may be implemented on or using the same computer system (e.g. cloud system) as system 200. That is, the training of the speaker recognition model and the use of the speaker recognition model for identifying a particular speaker from audio data of speech may be performed by (or using) the same computer system. Alternatively, system 200 and system 300 may be performed on (or using or may be implemented on or by) different computer systems.

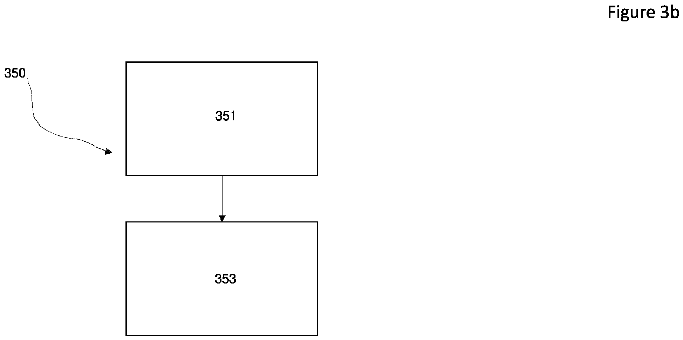

**Figure 3b** is a flow diagram schematically illustrating a general method 350 of identifying a particular speaker from audio data of speech. Method 350 may be implemented using system 300 described above.

In method 300, a step 351 comprises inputting, to a speaker recognition model, denoised (further) audio data of speech, denoised according to a denoising algorithm. The speaker recognition model being generated using: target audio data of speech from the particular speaker; and a universal background model generated using training audio data from a plurality of different speakers, wherein the training audio data and/or the target audio data are denoised according to the denoising algorithm. The denoising algorithm may be one of the denoising algorithms described above. Optionally, the method may include a further step comprising generating the denoised (further) audio data by applying the denoising algorithm to the (further) audio data of speech. The target audio data of speech may be target audio data of speech 211 and the universal background model may be universal background model 209. The speaker recognition model may be speaker recognition model 117 or speaker recognition model 217.

In method 300, a step 353 comprises outputting, from the speaker recognition model, an indication of whether speech of the denoised (further) audio data is spoken by the particular speaker. The indication may be indication 309 and may be used in further processing as described above.

It will be appreciated that this method may be performed by (or on) a computer system, which may be a cloud-based computer system such as described above.

### Computer system

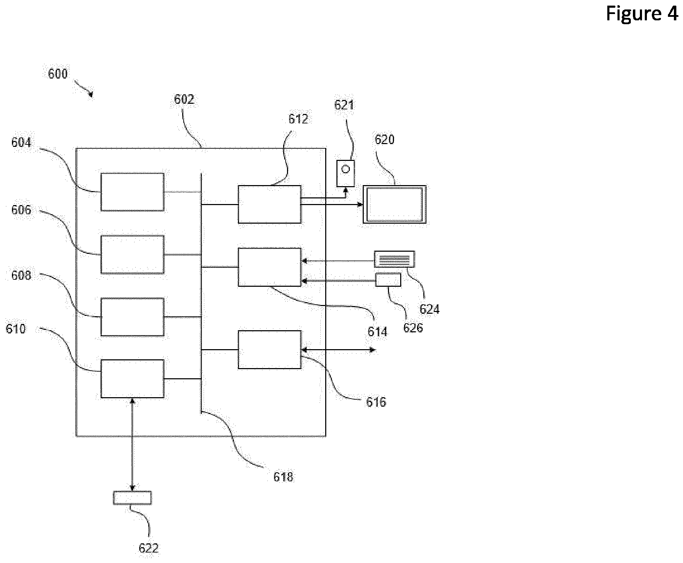

**Figure 4** schematically illustrates an example of a computer system 600. This computer system may be used to implement the system 200 of figure 2a and/or the system 300 of figure 3a. This computer system may also be used to implement the method 250 of figure 2b and/or the method 350 of figure 3b. The system 600 comprises a computer 602. The computer 602 comprises: a storage medium 604, a memory 606, a processor 608, an interface 610, a user output interface 612, a user input interface 614 and a network interface 616, which may be linked together over one or more communication buses 618.

The storage medium 604 may be any form of non-volatile data storage device such as one or more of a hard disk drive, a magnetic disc, a solid-state-storage device, an optical disc, a ROM, etc. The storage medium 604 may store an operating system for the processor 608 to execute in order for the computer 602 to function. The storage medium 604 may also store one or more computer programs (or software or instructions or code). These computer programs may comprise instructions which when executed by one or more processors, cause the one or more processors to carry out the method 250 or the method 350.

The memory 606 may be any random access memory (storage unit or volatile storage medium) suitable for storing data and/or computer programs (or software or instructions or code).

The processor 608 may be any data processing unit suitable for executing one or more computer programs (such as those stored on the storage medium 604 and/or in the memory 606), some of which may be computer programs according to embodiments of the invention or computer programs that, when executed by the processor 608, cause the processor 608 to carry out a method according to an embodiment of the invention such as, for example, method 250 or method 350 and configure the system 600 to be a system according to an embodiment of the invention such as, for example, system 200 or system 300. The processor 608 may comprise a single data processing unit or multiple data processing units operating in parallel, separately or in cooperation with each other. The processor 608, in carrying out data processing operations for embodiments of the invention, may store data to and/or read data from the storage medium 604 and/or the memory 606.

The interface 610 may be any unit for providing an interface to a device 622 external to, or removable from, the computer 602. The device 622 may be a data storage device, for example, one or more of an optical disc, a magnetic disc, a solid-state-storage device, etc. The device 622 may have processing capabilities - for example, the device may be a smart card. The interface 610 may therefore access data from, or provide data to, or interface with, the device 622 in accordance with one or more commands that it receives from the processor 608.

The user input interface 614 is arranged to receive input from a user, or operator, of the system 600. The user may provide this input via one or more input devices of the system 600, such as a mouse (or other pointing device) 626 and/or a keyboard 624, that are connected to, or in communication with, the user input interface 614. However, it will be appreciated that the user may provide input to the computer 602 via one or more additional or alternative input devices (such as a touch screen). The computer 602 may store the input received from the input devices via the user input interface 614 in the memory 606 for the processor 608 to subsequently access and process, or may pass it straight to the processor 608, so that the processor 608 can respond to the user input accordingly.

The user output interface 612 is arranged to provide a graphical/visual and/or audio output to a user, or operator, of the system 600. As such, the processor 608 may be arranged to instruct the user output interface 612 to form an image/video signal representing a desired graphical output, and to provide this signal to a monitor (or screen or display unit) 620 of the system 600 that is connected to the user output interface 612. Additionally or alternatively, the processor 608 may be arranged to instruct the user output interface 612 to form an audio signal representing a desired audio output, and to provide this signal to one or more speakers 621 of the system 600 that is connected to the user output interface 612.

Finally, the network interface 616 provides functionality for the computer 602 to download data from and/or upload data to one or more data communication networks.

It will be appreciated that the architecture of the system 600 illustrated in figure 5 and described above is merely exemplary and that other computer systems 600 with different architectures (for example with fewer components than shown in figure 5 or with additional and/or alternative components than shown in figure 5) may be used in embodiments of the invention. As examples, the computer system 600 could comprise one or more of: a personal computer; a server computer; a mobile telephone; a tablet; a laptop; a television set; a set top box; a games console; other mobile devices or consumer electronics devices; etc. Furthermore, the computer system 600 could be used to implement the functionality of car seat controller 107. Additionally, it is possible that some components of the computer system 600 are not located in the computer 602 and are, instead, part of a computer network connected to the computer 602 via the network interface 616. Additionally or alternatively, the computer system 600 may comprise multiple computers 602, e.g. in a network of computers such as a cloud system of computing resources.

### Modifications

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide exemplary systems and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of training a speaker recognition model for identifying a particular speaker from audio data of speech, the method comprising:
obtaining training audio data of speech from a plurality of different speakers;
generating, using the training audio data, a universal background model;
obtaining target audio data of speech of the particular speaker; and
generating, using the target audio data and the universal background model, the speaker recognition model;
wherein the training audio data and/or the target audio data are denoised according to a denoising algorithm; and
wherein the speaker recognition model is configured to:
receive as input denoised further audio data of speech, denoised according to the denoising algorithm; and
output an indication of whether speech of the denoised further audio data is spoken by the particular speaker.

2. The method of claim 1, wherein the training audio data is denoised according to the denoising algorithm.

3. The method of claim 1 or 2, wherein the speaker recognition model is part of a speaker recognition system, the speaker recognition system further comprising a denoising module configured to generate the denoised further audio data by applying the denoising algorithm to further audio data.

4. The method of any one of claims 1-3, wherein obtaining the training audio data comprises one of:
receiving the training audio data; and
generating the training audio data by applying the denoising algorithm to pre-denoised training audio data of speech.

5. The method of any one of claims 1-4, wherein the denoising algorithm comprises a speech enhancement algorithm.

6. The method of claim 5, wherein the speech enhancement algorithm is based on one of: a recurrent network; a generative adversarial network; and an autoregressive generative model.

7. The method of claim 5, wherein the speech enhancement algorithm is a single channel noise reduction algorithm.

8. The method of claim 7, wherein the single channel noise reduction algorithm comprises one or more of: spectral subtraction; a signal subspace approach; and iterative Wiener filtering.

9. The method of any one of claims 1-8, wherein the indication of whether speech of the denoised further audio data is spoken by the particular speaker comprises a confidence score that speech of the denoised further audio data is spoken by the particular speaker.

10. The method of any one of claims 1-9, wherein obtaining the target audio data comprises obtaining initial audio data of speech of the particular speaker and generating, from the initial audio data, the target audio data by applying the denoising algorithm to the initial audio data.

11. The method of any one of claims 1-10, wherein the plurality of different speakers comprises 500 or more different speakers.

12. The method of any one of claims 1-11, wherein the training audio data is of speech comprising at least 8 sentences spoken by each of the plurality of different speakers.

13. A method of identifying a particular speaker from audio data of speech, the method comprising:
inputting, to a speaker recognition model, denoised audio data of speech, denoised according to a denoising algorithm; and
outputting, from the speaker recognition model, an indication of whether speech of the denoised audio data is spoken by the particular speaker;
the speaker recognition model generated using:
target audio data of speech of the particular speaker; and
a universal background model generated using training audio data of speech from a plurality of different speakers, wherein the training audio data and/or the target audio data are denoised according to the denoising algorithm.

14. The method of claim 13, further comprising:
generating the denoised audio data by applying the denoising algorithm to audio data of speech.

15. A system for identifying a particular speaker from audio data of speech, the system comprising:
a denoising module configured to:
receive as input audio data of speech; and
generate denoised audio data of speech by applying a first denoising algorithm to the audio data; and
a speaker recognition model configured to:
receive as input the denoised audio data; and
output an indication of whether speech of the denoised audio data is spoken by the particular speaker;
the speaker recognition model generated using:
target audio data of speech from the particular speaker; and
a universal background model generated using training audio data of speech from a plurality of different speakers, wherein the training audio data and/or the target audio data are denoised according to the denoising algorithm.
